# EUROPEAN PATENT APPLICATION

(11) **EP 3 015 790 A1**
(43) Date of publication of application: **04.05.2016**
(21) Application number: 15190120.4
(22) Date of filing: 16.10.2015
(51) Int. Cl.: F24J 2/20, F24J 2/46

(54) **SOLAR THERMAL COLLECTOR AND MANUFACTURING METHOD THEREOF**

(30) Priority: 27.10.2014 CN 201410581494
(71) Applicant: Peng, Hsiu-Lin, Tainan City 744 (TW)
(72) Inventor: Peng, Hsiu-Lin, 807 Kaohsiung City (TW); Chen, Yu-Yao, 704 Tainan City (TW)
(74) Representative: Wimmer, Hubert

(57) **Abstract**

A manufacturing method of a solar thermal collector includes the following steps. First, a first slab and a second slab stacked together are provided, and the first slab and the second slab are welded together along a plurality of rails, such that the first slab and the second slab are connected to each other through the rails to form a plurality of stripe-shaped connecting portions. Then, a high pressure medium is filled between the first slab and the second slab, such that the first slab and the second slab, except for the stripe-shaped connecting portions, are pushed away from each other by pressure provided from the high pressure medium, so as to form a plurality of channels divided by the stripe-shaped connecting portions. A solar selective coating is formed on an outer surface of the first slab.

## Description

### BACKGROUND OF THE INVENTION

### Field of the Invention

The disclosure generally relates to a solar thermal collector and manufacturing method thereof.

### Description of Related Art

In recent years, there have been many developments that adopt solar energy as an energy source, for example, the energy of solar radiation is converted into electrical energy or thermal energy for variety of applications. When considering a solar thermal collector, an operation principle is to absorb the radiant energy of the sunlight and transfer into thermal energy, then using the thermal energy to heat up water or a heat transfer medium for subsequent applications. The solar thermal collector is generally configured with a solar selective coating for absorbing solar radiant energy and converting the solar radiant energy into thermal energy.

There are different types of solar thermal collectors. Some of the solar thermal collectors absorb the solar radiant energy through an absorbing plate, which is generally coated with a solar selective coating on one side of the absorbing plate to convert the solar radiant energy into thermal energy. Then the thermal energy is transmitted to heat collecting tubes, which are distributed and welded to another side of the absorbing plate, so as to heat up the heat-transfer medium flowing within the heat collecting tubes.

However, according to the above description, it is known that after the solar radiant energy is converted to thermal energy by the solar selective coating, the thermal energy has to go through a long distance, by means of thermal conduction, to cross the absorbing plate, the welding junctions, and through the wall of the heat conducting tubes before it can be transmitted to the heat transfer medium within the heat conducting tubes. In other words, the transmission path of the thermal energy from the solar selective coating to the heat transfer medium is relatively long and the contact surface of thermal conduction is relatively small, therefore, the heat conductivity and thermal efficiency of this type of collector is limited.

To solve the above-mentioned problems, in some conventional solar thermal collectors, two plates are welded together after forming mirrored grooves on each of the two plates, so as to form the heat collecting tubes through the mirrored grooves on the plates. The solar selective coating is coated on an outer surface of one of the plates. As a result, the selective coating is coated on the outer wall of the heat collecting tubes. In specific, the selective coating and heat collecting tubes share the same wall. After the solar selective coating converts the solar radiant energy into thermal energy, the thermal energy can be transmitted to the heat transfer medium in the heat collecting tube merely through the wall of the heat collecting tube and the contact surface of thermal conduction includes most part of solar selective coating area, rather than just the welding junctions. As such, the transmission path of the thermal energy from the solar selective coating to the heat-transfer medium is shortened and the contact surface is enlarged, so as to improve the heat conductivity and thermal efficiency of the collector. However, the welding process of the two pre-formed plates may create an alignment issue between the two plates. Misalignment between the two plates affects the quality of the solar thermal collector, but to precisely align the two plates during the welding process may reduce the process speed and increase production cost.

### SUMMARY OF THE INVENTION

Accordingly, the disclosure is directed to a solar thermal collector and manufacturing method thereof, which simplifies the manufacturing process and improves quality of the solar thermal collector.

Overall, the disclosure provides a manufacturing method of a solar thermal collector includes the following steps. First, a first slab and a second slab stacked together are provided, and the first slab and the second slab are welded together along a plurality of rails, such that the first slab and the second slab are connected to each other through the rails to form a plurality of stripe-shaped connecting portions. Then, a high pressure medium is filled between the first slab and the second slab, such that the first slab and the second slab, except for the stripe-shaped connecting portions, are pushed away from each other by pressure provided from the high pressure medium, so as to form a plurality of channels divided by the stripe-shaped connecting portions. A solar selective coating is formed on an outer surface of the first slab.

In specific, the disclosure provides a solar thermal collector including a first slab, a second slab, a plurality of channels and a solar selective coating. The second slab is stacked onto the first slab. The first slab and the second slab are connected to each other through a plurality of rails to form a plurality of stripe-shaped connecting portions. The channels are formed by filling a high pressure medium between the first slab and the second slab for the first slab and the second slab, except for the stripe-shaped connecting portions, to be pushed away from each other by pressure provided from the high pressure medium. The solar selective coating is disposed on an outer surface of the first slab.

According to one or more embodiments, the method of welding the first slab and the second slab includes laser welding or ultrasonic welding.

According to one or more embodiments, the high pressure medium includes liquid or gas.

According to one or more embodiments, the manufacturing method of the solar thermal collector further includes: before filling the high pressure medium and after welding the first slab and the second slab together, the first slab and the second slab are disposed in a mold, such that the first slab and the second slab are confined by the mold after filling the high pressure medium.

According to one or more embodiments, the step of forming the solar selective coating on the outer surface of the first slab is performed before filling the high pressure medium.

According to one or more embodiments, the step of forming the solar selective coating on the outer surface of the first slab is performed after filling the high pressure medium.

According to one or more embodiments, a material of the first slab and the second slab comprises metal or plastic.

According to one or more embodiments, the first slab and the second slab are respectively flat plates.

According to one or more embodiments, one of the first slab and the second slab is a semi-shaped slab or a fully shaped slab.

According to one or more embodiments, the first slab is a metal slab, and the second slab is a plastic slab.

According to one or more embodiments, the step of welding the first slab and the second slab along the rails is performed on an outer surface of the second slab.

According to one or more embodiments, a plurality of first welding marks formed on the outer surface of the first slab by welding are smoother than a plurality of second welding marks formed on the outer surface of the second slab by welding.

Based on the above, in the solar thermal collector and the manufacturing method thereof provided by the disclosure, the first slab and the second slab stacked together are first welded along the rails, and then a plurality of channels are formed between the first slab and the second slab by filling the high pressure medium. Because the first slab and the second slab do not have to be precisely aligned with each other when being welded together, the misalignment problem of the channels during welding process can be avoided. Accordingly, the solar thermal collector and the manufacturing method thereof provided by the disclosure can simplify the manufacturing process and improve yield.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
Fig. 1 illustrates a schematic top view of a solar thermal collector according to one of exemplary embodiments.
Fig. 2A to Fig. 2E illustrate cross-sectional views of manufacturing process of the solar thermal collector along line I-I' depicted in Fig. 1.
Fig. 3 illustrates a cross-sectional view of another manufacturing process of the solar thermal collector depicted in Fig. 2B.

### DESCRIPTION OF THE EMBODIMENTS

Reference will now be made in detail to the preferred embodiments of this disclosure, examples of which are illustrated in the accompanying drawings. Wherever possible, the same reference numbers are used in the drawings and the description to refer to the same or like parts.

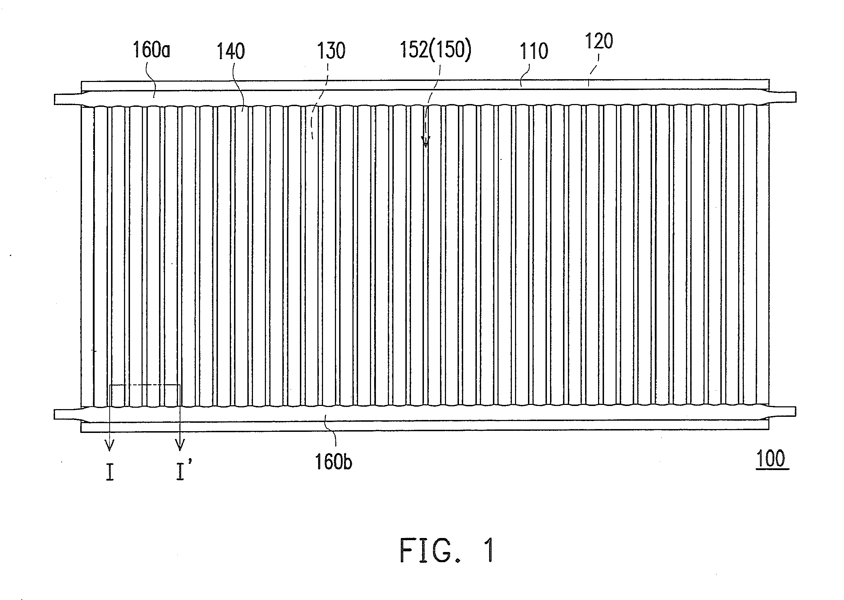

Fig. 1 illustrates a schematic top view of a solar thermal collector according to an embodiment of the invention. Referring to Fig. 1, in this embodiment, the solar thermal collector 100 includes a first slab 110, a second slab 120, a plurality of channels 130 and a solar selective coating 140. The first slab 110 and the second slab 120 (staked under the first slab 110 shown in Fig. 1) are connected to each other. The channels 130 are formed between the first slab 110 and the second slab 120. The solar selective coating 140 is disposed on an outer surface of the first slab 110. As such, when the sun irradiates the solar thermal collector 100, the solar selective coating 140 is configured to absorb solar radiant energy of sunlight, convert the solar radiant energy into thermal energy and then transmit the thermal energy to the channels 130. At the time, a heat-transfer medium (not shown) flows into the channels 130 of the solar thermal collector 100, and flows out of the solar thermal collector 100 after absorbing the thermal energy transmitted to the channels from the solar selective coating 140. Accordingly, the solar radiant energy can be absorbed and converted into the thermal energy by the solar selective coating 140 of the solar thermal collector 100, and the thermal energy can be collected and transferred by the heat-transfer medium flowing through the channels 130.

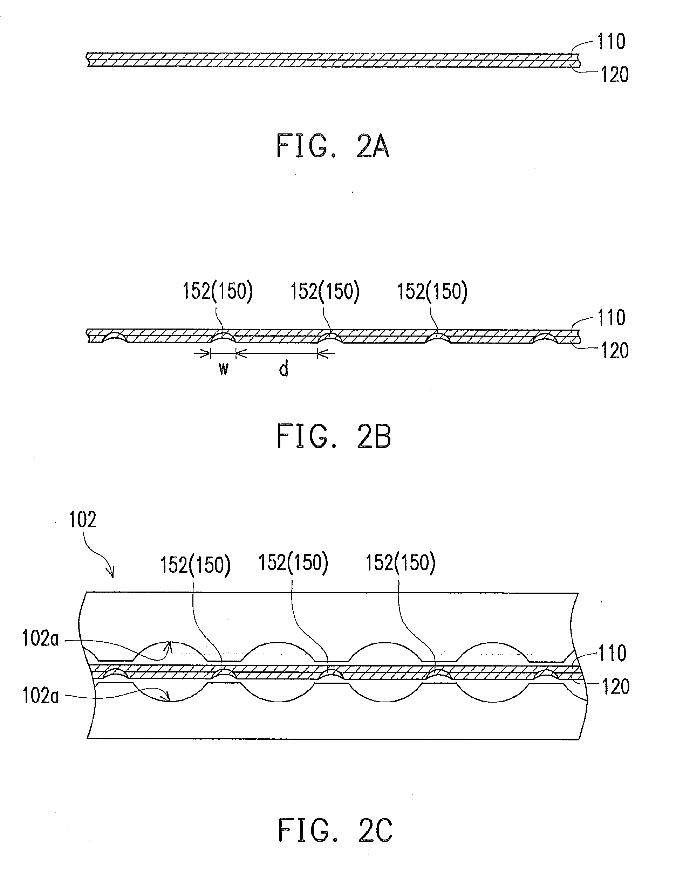

Fig. 2A to Fig. 2E illustrate cross-sectional views of manufacturing process of the solar thermal collector along line I-I' depicted in Fig. 1. Referring to Fig. 1 and Fig. 2A to Fig. 2E, in this embodiment, the manufacturing method of the solar thermal collector 100 includes the following steps.

Firstly, referring to Fig. 1 and Fig. 2A, a first slab 110 and a second slab 120 stacked together are provided. In this embodiment, the first slab 110 and the second slab 120 stacked together, which are provided in the previous step, are respectively flat plates. After being made to suitable sizes according to actual requirements, the first slab 110 and the second slab 120 can be simply stacked together without excessively precise alignment.

Referring to Fig. 1 and Fig. 2B, the first slab 110 and the second slab 120 are welded together along a plurality of rails 150, such that the first slab 110 and the second slab 120 are connected to each other through the rails 150 to form a plurality of stripe-shaped connecting portions 152. In this embodiment, the rails 150 can be deemed as the dividing lines between the channels 130 depicted in Fig. 1. Then the first slab 110 and the second slab 120 are welded together along the rails 150 to form the stripe-shaped connecting portions 152. Since Fig. 2B illustrates the cross-sectional view of the solar thermal collector 100 of Fig. 1, the rails 150 and the stripe-shaped connecting portions 152 in Fig. 2B are illustrated in shapes of semicircles, while the rails and the stripe-shaped connecting portions 152 are actually in stripe shape as shown in Fig. 1. As such, the stripe-shaped connecting portions 152 can make the subsequently formed channels 130, which are also in stripe shape. The rails 150 are separated by predetermined intervals and arranged in parallel, such that the stripe-shaped connecting portions 152 and the subsequently formed channels 130 are also arranged in parallel. The width w of the stripe-shaped connecting portions 152 and the interval d between two adjacent stripe-shaped connecting portions 152 may be adjusted according to actual requirements, and the sizes thereof affect the width of the channels 130 and the interval between the channels 130.

Moreover, in this embodiment, the step of welding the first slab 110 and the second slab 120 together, along the rails 150, may be performed on an outer surface of the second slab 120. As such, a surface of a plurality of first welding marks formed by welding along the stripe-shaped connecting portions 152 on the outer surface of the first slab 110 is smoother than a surface of a plurality of second welding marks formed by welding along the stripe-shaped connecting portions 152 on the outer surface of the second slab 120, which means the outer surface of the first slab 110 is relatively smoother than the outer surface of the second slab 120. Accordingly, the first slab 110 and the second slab 120 may be welded together from the outer surface of the second slab 120, so as to maintain surface smoothness of the outer surface of the first slab 110. As such, the embodiment maintains the outer surface smoothness of the first slab 110, so as to help improve the surface quality of the subsequently formed solar selective coating 140.

Next, referring to Fig. 1 and Fig. 2C, after welding together, the first slab 110 and the second slab 120 are disposed in a mold 102. In this embodiment, the mold 102 has a plurality of grooves 102a. The first slab 110 and the second slab 120, except for the stripe-shaped connecting portions 152, are corresponding to the grooves 102a. The grooves 102a of this embodiment are, for example, arc-shaped grooves, but the disclosure does not limit the shapes of the grooves. The shapes of the grooves 102a would affect the shapes of the subsequently formed channels 130, so the shapes thereof may be adjusted according to actual requirements.

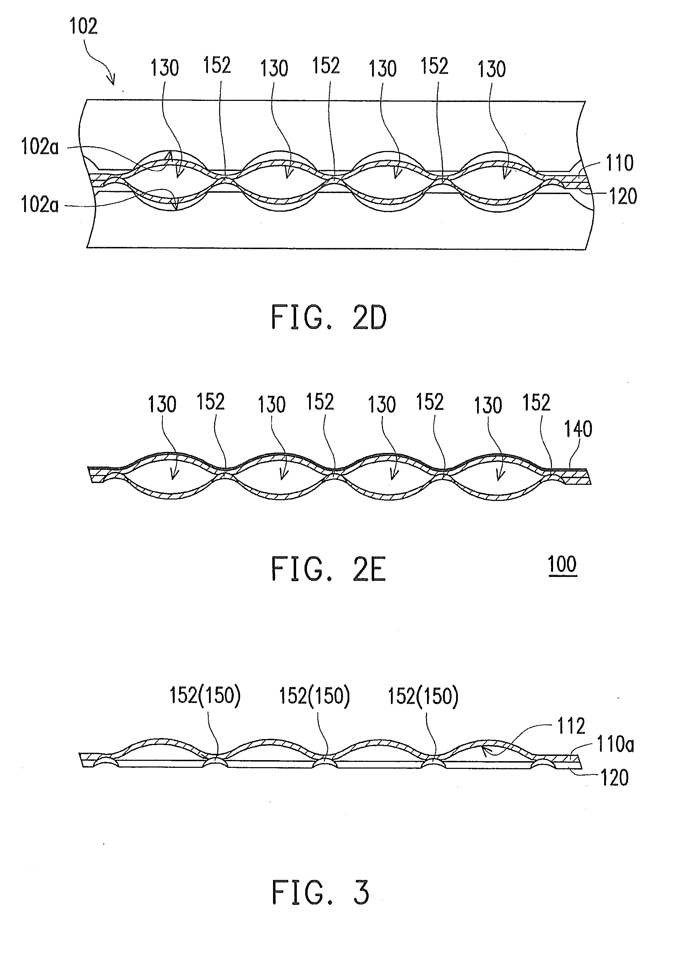

Next, referring to Fig. 1 and Fig. 2D, a high pressure medium (not shown) is filled between the first slab 110 and the second slab 120, such that the first slab 110 and the second slab 120, except for the stripe-shaped connecting portions 152, are pushed away from each other by pressure provided from the high pressure medium, so as to form a plurality of channels 130 divided by the stripe-shaped connecting portions 152. To be more specific, in this embodiment, the first slab 110 and the second slab 120 are welded together at the stripe-shaped connecting portions 152. The high pressure medium may be liquid or gas, which is filled between the first slab 110 and the second slab 120 through high pressure, such that, except for the stripe-shaped connecting portions 152, the first slab 110 and the second slab 120 are moved away from each other by the high pressure medium, so as to form the channels 130.

In addition, the first slab 110 and the second slab 120 are disposed in the mold 102 before the high pressure medium is filled between the first slab 110 and the second slab 120, but after welding the first slab 110 and the second slab 120 together. The first slab 110 and the second slab 120 are corresponding to the grooves 102a of the mold 102. Therefore, after filling the high pressure medium, the first slab 110 and the second slab 120, except for the stripe-shaped connecting portions 152, are confined by the grooves 102a of the mold 102. As a result, the cross sectional shape of each channels 130 is correlated to the shape of each groove 102a.

Afterward, referring to Fig. 1 and Fig. 2E, a solar selective coating 140 is formed on an outer surface of the first slab 110. Specifically, in this embodiment, the step of forming the solar selective coating 140 on the outer surface of the first slab 110 is performed after filling the high pressure medium. Since the step of welding the first slab 110 and the second slab 120 together is performed on the outer surface of the second slab 120, the outer surface of the first slab 110 is relatively smoother than the one of the second slab 120, which facilitates the solar selective coating 140 smoothness when be coated on the outer surface of the first slab 110. Namely, the manufacturing method of this embodiment can avoid the situation of uneven solar selective coating 140 coated due to the welding marks on the stripe-shaped connecting portions 152. At this point, the solar thermal collector 100 depicted in Fig. 1 is substantially finished.

Besides the manufacturing process described above, the manufacturing method of the solar thermal collector provided by the disclosure includes other adaptable manufacturing process. For instance, the step of forming the solar selective coating 140 may be adjusted to be performed before the step of disposing the welded first slab 110 and second slab 120 in the mold 102, and the step of filling the high pressure medium. In other words, in this embodiment, since the first slab 110 and the second slab 120 are flat plates before being disposed in a mold 102 and filling the high pressure medium, the solar selective coating 140 can be formed on the outer surface of the first slab 110 at the time when the first slab 110 is still a flat plate. In another embodiment, the solar selective coating 140 may be formed on the first slab 110 even before welding the first slab 110 and the second slab 120. Accordingly, the order of performing the step of forming the solar selective coating 140 may be adjusted according to actual requirements. To be more specific, the step of forming the solar selective coating 140 may be adjusted to be performed before the step of welding the first slab 110 and the second slab 120, adjusted to be performed between the step of welding the first slab 110 and the second slab 120 and the step of filling the high pressure medium to from the channels 130, or adjusted to be performed after the step of filling the high pressure medium to from the channels 130. The disclosure does not limit the order of performing the step of forming the solar selective coating 140.

On the other hand, referring to Fig. 1 and Fig. 2A to Fig. 2E, in this embodiment, the material of the first slab 110 and the second slab 120 may be metal or plastic, and it can be chosen based on actual requirements. For instance, metal has favourable thermal conductivity, which facilitates transferring the thermal energy converted by the solar selective coating 140 to the heat-transfer medium in the channels 130 formed by the first slab 110 and the second slab 120. In contrast, plastic has favourable flexibility and manufacturability, which improves the shaping speed of the channels 130 during the process of forming the channels 130 by filling the high pressure medium, and the plastic further has advantages of being light in weight and low in cost. Accordingly, the method of welding the first slab 110 and the second slab 120 may be chosen based on the material of the first slab 110 and the second slab 120. When the material of the first slab 110 and the second slab 120 is chosen to be metal, the method of welding the first slab 110 and the second slab 120 can be laser welding. Alternatively, when the material of the first slab 110 or the second slab 120 is chosen to be plastic, the method of welding the first slab 110 and the second slab 120 can be ultrasonic welding. The material and the welding method described above are merely for the purpose of illustration, and the disclosure is not limited thereto.

Furthermore, in another embodiment, the materials of the first slab 110 and the second slab 120 are not limited to be the same. For example, referring to Fig. 3, wherein Fig. 3 illustrates a cross-sectional view of another manufacturing process of the solar thermal collector depicted in Fig. 2B. In the embodiment of Fig. 3, the solar selective coating 140 is disposed on the outer surface of the first slab 110 in the subsequent steps, so the thermal conductivity of the first slab 110 is relatively more important than the thermal conductivity of the second slab 120. Namely, the thermal energy converted by the subsequently formed solar selective coating 140 can be quickly transmitted to the heat-transfer medium in the channels 130 through the first slab 110a. Therefore, in the embodiment of Fig. 3, the material of the first slab 110 may be metal. However, the plasticity of metal is relatively lower than plastic, so the first slab 110a provided in the first step shown in Fig. 2A can be a semi-shaped slab or a fully shaped slab. Namely, the first slab 110a has been pre-formed by some adequate process to form a plurality of concave grooves 112 thereon, and these concave grooves 112 would form the channels 130 in the subsequent step. Accordingly, since the first slab 110a is a semi-shaped slab or a fully shaped slab, the subsequent step of forming the channels 130 by filling the high pressure medium can take less time. On the contrary, since the low thermal conductivity of the second slab 120 can reduce the heat loss of the heat-transfer medium, the second slab 120 may be chosen to be a plastic slab, which has lower thermal conductivity and weight less than a metal slab, to reduce the heat loss and weight of the subsequently formed solar thermal collector. In addition, since the second slab 120 made of plastic has favorable flexibility and manufacturability, the second slab 120 made of plastic material can be quickly shaped during the process of filling the high pressure medium to form the channels 130. Based on the disclosure above, the materials of the first slab 110 or 110a and the second slab 120 may be chosen independently according to actual requirements. The first slab 110 or 110a and the second slab 120 may be fixed together through ultrasonic welding or other suitable methods to fuse the metal component with plastic component, which can be adjusted according to actual requirements.

Furthermore, in the embodiment of Fig. 3, even though the first slab 110a is a semi-shaped or fully shaped metal slab, the second slab 120 made of plastic material still maintains as a flat plate, so in the step of providing the first slab 110a and the second slab 120 stacked together, the first slab 110a and the second slab 120 can be simply stacked together without precise alignment. Also, the step of welding the first slab 110a and the second slab 120 along the rails 150 can be performed on the outer surface of the second slab 120 to maintain the outer surface smoothness of the first slab 110a. The channels 130 can then be fully formed by filling the high-pressure medium between the welded first slab 110a and second slab 120. Similarly, the solar selective coating 140 can be formed on the outer surface of the first slab 110a before or after filling the high-pressure medium between the welded first slab 110a and second slab 120. The details of the steps described above may refer to the previous embodiment, and thus are omitted herein.

Referring back to Fig. 1, in this embodiment, besides the components described above, the solar thermal collector 100 may further includes a connecting tubes 160a and 160b. The channels 130 are connected between the connecting tubes 160a and 160b, such that the heat-transfer medium can flow through the entire solar thermal collector 100 via the connecting tubes 160a, 160b, and the channels 130. In other words, the connecting tubes 160a and 160b can be served as inlets/outlets for the heat-transfer medium to flow in and out of the solar thermal collector 100. The connecting tubes 160a and 160b are formed between the first slab 110 and the second slab 120. Therefore, the manufacturing method of the connecting tubes 160a and 160b may be the same as the method for forming the channels 130. Namely, the manufacturing method of this embodiment can form the channels 130 and the connecting tubes 160a and 160b at the same time. In addition, even though two connecting tubes 160a and 160b are illustrated in the solar thermal collector 100 of Fig. 1, the specific number and the location of the connecting tube(s) can be adjusted according to actual requirements.

In summary of the solar thermal collector and the manufacturing method thereof provided by the disclosure, the first slab and the second slab stacked together are first welded along the rails, and then a plurality of channels are formed between the first slab and the second slab by filling the high pressure medium. Therefore, when comparing with the conventional technique of welding pre-made heat-conducting tubes onto the solar-absorbing plate, the solar thermal collector of this disclosure has relatively large contact surface of thermal conduction and can transmit the thermal energy from the solar selective coating to the heat-transfer medium merely through the wall between the solar selective coating and heat-transfer medium.

Since the contact surface is significantly enlarged and the transmission path of the thermal energy from the solar selective coating to the heat transfer medium is significantly shortened, the heat conductivity and thermal efficiency of the proposed collector is improved. In addition, when comparing with the conventional technique of firstly forming mirrored grooves on each of the two slabs and then welding the two slabs together, the proposed manufacturing method of the solar thermal collector can resolve the misalignment issue between the two slabs and, as a result, increase the welding speed, reduce the manufacturing cost, and improve the production yield of the solar thermal collector.

## Claims

1. A manufacturing method of a solar thermal collector (100), comprising:
providing a first slab (110, 110a) and a second slab (120) stacked together, and welding the first slab (110, 110a) and the second slab (120) together along a plurality of rails (150), such that the first slab (110, 110a) and the second slab (120) are connected to each other through the rails (150) to form a plurality of stripe-shaped connecting portions (152);
filling a high pressure medium between the first slab (110, 110a) and the second slab (120), such that the first slab (110, 110a) and the second slab (120), except for the stripe-shaped connecting portions (152), are pushed away from each other by pressure provided from the high pressure medium, so as to form a plurality of channels (130) divided by the stripe-shaped connecting portions (152); and
forming a solar selective coating (140) on an outer surface of the first slab (110, 110a).

2. The manufacturing method of the solar thermal collector (100) as claimed in claim 1, wherein the method of welding the first slab (110, 110a) and the second slab (120) comprises laser welding or ultrasonic welding.

3. The manufacturing method of the solar thermal collector (100) as claimed in claim 1, wherein the high pressure medium comprises liquid or gas.

4. The manufacturing method of the solar thermal collector (100) as claimed in claim 1, further comprising:
disposing the first slab (110, 110a) and the second slab (120) in a mold (102) before filling the high pressure medium and after welding the first slab (110, 110a) and the second slab (120) together, such that the first slab (110, 110a) and the second slab (120) are confined by the mold (102) after filling the high pressure medium.

5. The manufacturing method of the solar thermal collector (100) as claimed in claim 1, wherein the step of forming the solar selective coating (140) on the outer surface of the first slab (110, 110a) is performed before filling the high pressure medium.

6. The manufacturing method of the solar thermal collector (100) as claimed in claim 1, wherein the step of forming the solar selective coating (140) on the outer surface of the first slab (110, 110a) is performed after filling the high pressure medium.

7. The manufacturing method of the solar thermal collector (100) as claimed in claim 1, wherein a material of the first slab (110, 110a) and the second slab (120) comprises metal or plastic.

8. The manufacturing method of the solar thermal collector (100) as claimed in claim 1, wherein the first slab (110, 110a) and the second slab (120) are respectively flat plates.

9. The manufacturing method of the solar thermal collector (100) as claimed in claim 1, wherein one of the first slab (110, 110a) and the second slab (120) is a semi-shaped slab or a fully shaped slab.

10. The manufacturing method of the solar thermal collector (100) as claimed in claim 1, wherein the first slab (110, 110a) is a semi-shaped slab or a fully shaped slab, and the second slab (120) is a plastic slab.

11. The manufacturing method of the solar thermal collector (100) as claimed in claim 1, the step of welding the first slab (110, 110a) and the second slab (120) along the rails (150) is performed on an outer surface of the second slab (120).

12. A solar thermal collector (100), comprising:
a first slab (110, 110a);
a second slab (120) stacked onto the first slab (110, 110a), the first slab (110, 110a) and the second slab (120) connected to each other through a plurality of rails (150) to form a plurality of stripe-shaped connecting portions (152);
a plurality of channels (130) formed by filling a high pressure medium between the first slab (110, 110a) and the second slab (120) for the first slab (110, 110a) and the second slab (120), except for the stripe-shaped connecting portions (152), to be pushed away from each other by pressure provided from the high pressure medium; and
a solar selective coating (140) disposed on an outer surface of the first slab (110, 110a).

13. The solar thermal collector (100) as claimed in claim 12, wherein the high pressure medium comprises liquid or gas.

14. The solar thermal collector (100) as claimed in claim 12, wherein a material of the first slab (110, 110a) and the second slab (120) comprises metal or plastic.

15. The solar thermal collector (100) as claimed in claim 12, wherein a plurality of first welding marks formed on the outer surface of the first slab (110, 110a) by welding are smoother than a plurality of second welding marks formed on the outer surface of the second slab (120) by welding.
